# EUROPEAN PATENT APPLICATION

(11) **EP 3 289 877 A1**
(43) Date of publication of application: **07.03.2018**
(21) Application number: 16382407.1
(22) Date of filing: 31.08.2016
(51) Int. Cl.: A01N 63/00, A01N 63/04, A01P 21/00

(54) **COMPOSITION COMPRISING SPECIES FROM THE GENUS GLOMUS AND TRICHODERMA HARZIANUM T78 AND USE THEREOF AS A PLANT GROWTH PROMOTER**

(71) Applicant: Microgaia Biotech, S.L., 30100 Murcia (ES); Symbiom sro., 563 01 Lanskroun (CZ)
(72) Inventor: Pascual Valero, José Antonio, 30100 Murcia (ES); Vosátka, Miroslav, 563 01 Lanskroun (CZ); Sánchez López, Cristobal, 30100 Murcia (ES); Látr, Ale, 563 01 Lanskroun (CZ)
(74) Representative: Sahuquillo Huerta, Jesús

(57) **Abstract**

Composition comprising species from the genus *Glomus* and *Trichoderma harzianum* T78 and use thereof as a plant growth promoter. Composition comprising species from the genus *Glomus* and the *Trichoderma harzianum* T78 strain, identified by the deposit number CECT 20714. Species of the genus *Glomus* are *Glomus intraradices, Glomus claroideum, Glomus mosseae* and *Glomus etunicatum.* Composition for use thereof as a plant growth promoter or for preventing or treating infections caused by pathogenic microorganisms in a plant.

## Description

### Field of the invention

The present invention refers to products for promoting growth in plants and for preventing infections caused by phytopathogenic microorganisms. Particularly, the present invention refers to a composition comprising species from the genus *Glomus* and *Trichoderma harzianum* T78 for use thereof as a plant growth promoter or for preventing or treating infections caused by phytopathogenic microorganisms in a plant.

### BACKGROUND OF THE INVENTION

*Glomus* is a mycorrhiza. Mycorrhizae are symbiotic microorganisms of the plants, and they are naturally found in soils. More than 1000 different species of mycorrhizae are described being characterized according to the species and the type of soil in which they are found. In general, mycorrhizae provides the plant with phosphorous and access to places in the ground which roots cannot reach, and plants in turn contribute with carbonated sources required for the mycorrhizae growth.

However, not all the mycorrhizae are equally efficient or have wide-spectrum action; being mostly observed in this regard that there are different species, wherein some of them are more effective against others depending on the plant species with which they establish a mycorrhizal association or on the type of soil. As expected, mycorrhizae are influenced by other living organisms which are found in the environment thereof, sometimes positively, negatively or neutrally. The most usual circumstance is that there is a competition for nutrients and space, and, as a consequence, the final result is that the interrelationship with other microorganisms is negative, or at best neutral.

*Trichoderma harzianum* T78 is a strain featuring the capacity of protecting the root, reducing incidence of infections caused by the attack of phytopathogenic and/or opportunistic microorganisms.

*Mycorrhizae* and *Trichoderma* compete with each other, which makes them undesirable for being together in the same ecological niche. The majority of the publications conclude that, generally, interrelationship between *mycorrhizae* and *Trichoderma* has negative results.

### DESCRIPTION OF THE INVENTION

In a first aspect, the present invention provides a composition comprising species of the genus *Glomus* and the strain *Trichoderma harzianum* T78 identified by the deposit number CECT 20714.

The strain *Trichoderma harzianum* T78 has been deposited on the 22^{nd} of November of 2006, according to Budapest Treaty on the International Recognition of the Deposit of Microorganisms for the Purposes of Patent Procedure, in the International Depositary Authority "Colección Española de Cultivos Tipo" (Spanish Type Culture Collection) (CECT, for its Spanish acronym) at the address Parc Cientific Universitat de Valencia, Catedrático Agustín Escardino, 9. 46980, Paterna, (Valencia), Spain, by Microgaia Biotech, SL, with address at Parque Científico de Murcia, Campus Espinardo, Edificio S - Ctra. Madrid, Km. 388. 30100 Espinardo (Murcia, Spain).

The strain *Trichoderma harzianum* T78 has been identified by means of the reference T 78, and it was given the deposit number CECT 20714 by the international Depositary Authority.

Another embodiment consists of the composition according to the first aspect of the invention, comprising a mixture of the species *Glomus intraradices, Glomus claroideum, Glomus mosseae* and *Glomus etunicatum.*

Another embodiment consists of the composition according to the first aspect of the invention, comprising bentonite and zeolite.

Another embodiment consists of the composition according to the first aspect of the invention, wherein the particle size of the composition is equal to or smaller than 0.5 mm.

In a second aspect, the present invention provides a composition according to the first aspect of the invention for use thereof as a plant growth promoter or for preventing or treating infections caused by pathogenic microorganisms in a plant.

Another embodiment consists of the composition for use thereof according to a second aspect of the invention, wherein said plant is selected from the group consisting of tomato, corn, pepper, lettuce and melon.

Another embodiment consists of the composition for use thereof according to the second aspect of the invention, wherein said pathogenic microorganism is selected from the group consisting of *Fusarium oxysporum, Pythium ultimum, Botrytis cinerea* and *oidium.*

The composition has synergistic effect. The combined strains show specificity. *Trichoderma harzianum* T78, improves the effect of the mycorrhiza, increasing the mycorrhization percentage of colonized roots, thus offering a better response from the plant, enhancing the harvest yield.

In that sense, several microorganisms from this genus and species were assayed, confirming that the *Trichoderma harzianum* T78 (T78) strain is the only one from the strains being assayed together with the selected *Glomus sp,* capable of improving, by itself alone, the efficiency due to the presence of mycorrhizae.

Different combinations have been assayed having proportional concentrations of both microorganisms, establishing the optimum dosage of each strain in the final product.

Another embodiment consists of the composition according to the first aspect of the invention, wherein the concentration of Trichoderma harzianum is 5x10⁶ ufc/g and the concentration of the species from the genus Glomus is 350 ppg (propagules per gram of mycorrhiza).

Both microorganisms are immobilized in the same inorganic system of argillic nature, adapting the means used for the production of each one of them, until obtaining a uniform granulometry which prevents the product from separating into two phases (one immobilized in zeolite and the other in bentonite for production thereof), and an adequate concentration of infective propagules/gram of mycorrhiza.

Thus, a homogeneous product was obtained being capable of containing both microbial products, resulting in an adequate microbial combination, which allows increased assayed cultures.

The T78 strain modifies the radicular system, which makes it easier for the mycorrhizal symbiosis to establish therein. Furthermore, the protective effect allows reducing the competition that may be between mycorrhiza and other microorganisms by the presence of the T78 strain in the rhizosphere, which causes the final effect to be much bigger, thus allowing increased yield of the assayed harvests.

### BRIEF DESCRIPTION OF THE DRAWINGS

Figure 1. Fresh weight of corn plants treated with the different combinations of mycorrhiza and Trichoderma harzianum strains.
Figure 2. Dry weight of corn plants treated with the different combinations of mycorrhiza and Trichoderma harzianum strains.
Figure 3. Fresh weight of tomato plants treated with the different combinations of mycorrhiza and Trichoderma harzianum strains.
Figure 4. Dry weight of tomato plants treated with the different combinations of mycorrhiza and Trichoderma harzianum strains.
Figure 5. Percentage of incidence of plants affected by the pathogen *Fusarium oxysporum.*
Figure 6. Percentage of dead plants in the different treatments.
Figure 7. Mycorrhization percentage at the end of the different treatment assay.
Figure 8. Increase in the production of different treatments.
Figure 9. Mycorrhization percentage of the different treatments.
Figure 10. Percentage of production increase with respect to the standard or control.
Figure 11. Mycorrhization percentage of the different treatments.
Figure 12. Melon crop yield per plant in kg of the different treatments.

### PREFERRED EMBODIMENTS

ASSAY 1. Factorial study of different mycorrhizae and Trichoderma sp species and strains on corn and tomato crops, assessing the mycorrhization degree and content of Trichoderma harzianum colony forming units.

The object of this activity was to select different mycorrhizae (AMFs) and Trichoderma strains, which, a priori, because of the characteristics thereof, feature characteristic effects of the genus they belong to, that is, that a priori feature survival and action capability under field conditions.

### Microorganisms selection

For this purpose, two pools of AMFs (AMF1 and AMF2) strains were provided, which had been immobilized in zeolite, a characteristic means in the immobilization of this microorganism. On the other hand, three different strains of the genus Trichoderma were provided. These were selected by the capacity thereof for resisting under conditions of low organic material content and low hydric content, habitual conditions in fields. The strains being selected were T38, T55 and T78 strains immobilized in clay, in this case bentonite.

The number of viable spores for each one of the three Trichoderma strains was determined by means of culture in PDA-rose bengal. The number of spores was about 10(7) UFC per gram, with no difference existing depending on the Trichoderma starting strain.

### Experiment-corn plant crop

Once having selected both the two mycorrhizae and the three Trichoderma strains, 5 L containers were prepared which were filled with agricultural soil, previously sterilized so as to avoid natural mycorrhization effects which may hinder observation of the interaction to be studied. A corn seed was planted in each container, as it is very sensitive to the mycorrhization effect; for that purpose, a little hole was done in the centre of the pot, placing 5 grams of the mycorrhiza preparation and 1 gram of each of the Trichoderma preparations, placing them on top of the seed, covering it with the soil and watering it by immersion of the containers on water trays, so that water humidifies the soil by capillarity and thus avoiding the possible washing out of the biological material inoculated. After 5 hours under immersion and when water was observed to have reached the surface, it was randomly spread out in a greenhouse. Each one of the treatments consisted of 10 repetitions, so that the results were statistically valid.

The established treatments were as follows:

| | | |
|---|---|---|
| AMF1 T78 | AMF2 T78 | T78 |
| AMF1 T55 | AMF2 T55 | T55 |
| AMF1 T38 | AMF2 T38 | T38 |
| AMF1 | AMF2 | control |

Containers were at disposal for 45 days, after which they were removed, proceeding with measurement of the fresh weight and dry weight of the corn plants, Trichoderma count and mycorrhization percentage calculation.

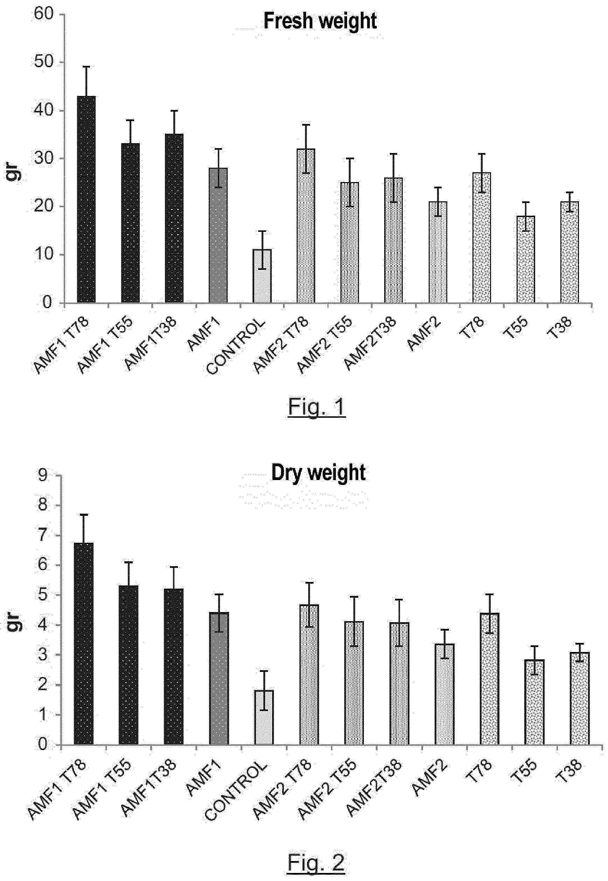

This study resulted in the conclusion that the three Trichoderma strains would produce an increase of the plants growth, being this higher in the case of T78 strain with respect to the other two (Figure 1 and 2). Regarding the mycorrhizae, it is indicated how the AMF1 did show an increase in the corn plant growth as compared to the control, although the increase was less than that of the samples including the T78 strain. Table 1 show the mycorrhization percentages and levels of Trichoderma harzianum T78 of the different treatments; among those, it is highlighted how the mycorrhization percentages were absent in the control soil and in the treatments only including Trichoderma; however, when they incorporated mycorrhiza, either AMF1 or AMF2, they showed a mycorrhization which in general was enhanced in treatments where Trichoderma was included, especially in those wherein the Trichoderma treatment included was T78, as in the case of AMF2 and combinations thereof with Trichoderma; inoculation of AMF1 did show significant levels of mycorrhization percentage, which were increased by the presence of the different Trichoderma strains, although to a lesser extent than the AMF2. The highest mycorrhization levels and the biggest size in the plant were shown in the AMF1-T78 association.

**Table 1. Mycorrhization percentage and colony forming units of the different Trichoderma harzianum strains used in the association for corn crops.**

| | Mycorrhization percentage | Standard Deviation | Trichoderma log (ufc / g) | Standard Deviation |
|---|---|---|---|---|
| AMF1 T78 | 75 | 8 | 4.48 | 0.09 |
| AMF1 T55 | 56 | 7 | 4.30 | 0.08 |
| AMF1 T38 | 59 | 7 | 4.00 | 0.03 |
| AMF1 | 53 | 6 | 0.00 | 0.00 |
| Control | 0 | 0 | 0.00 | 0.00 |
| AMF2 T78 | 66 | 6 | 4.48 | 0.07 |
| AMF2 T55 | 50 | 4 | 4.30 | 0.09 |
| AMF2 T38 | 53 | 7 | 4.30 | 0.20 |
| AMF2 | 42 | 5 | 0.00 | 0.00 |
| T78 | 0 | 0 | 5.70 | 0.41 |
| T55 | 0 | 0 | 4.48 | 0.10 |
| T38 | 0 | 0 | 5.00 | 0.10 |

### Experiment-tomato plant crop under controlled conditions at seedbed

This assay on tomato crops was carried out under same variables than in the previous assay, with the purpose of realizing a contrasted selection, not only with one crop. This assay was performed at seedbed level, using the habitual seedbed containers having 150 seed cells per treatment, taking 50 plants from each tray calculating the means thereof, making for each of the treatments 5 replicates consisting of 5 trays. In this case, the seed cells were filled with usual peat moss for seedling germination in seedbeds, and in each one of them the equivalent of each one of the microorganisms at a ratio being equivalent to 0.3 g of mycorrhiza per 0.1 g of Trichoderma per seed.

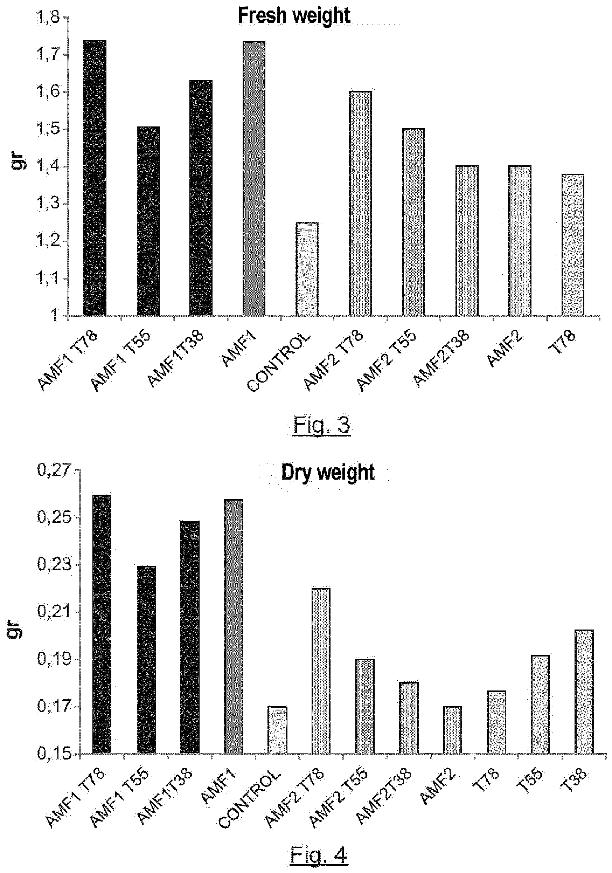

The results shown were equivalent to those observed in the previous assay, with the exception that in this case there were much lower levels of mycorrhization than in the case of the corn, since this crop is less sensitive to mycorrhization, and also because this first assay was carried out in seedbeds, the containers of which are small, wherein this can influence on the mycorrhization effect, or on the contact time not being enough in the case of the seedbed. It is established that the minimum time to observe an adequate mycorrhization is about 50 days, and in these cases permanence time in the seedbeds was less than 30 days. Regarding the type of mycorrhiza, again the treatments with AMF1 showed better mycorrhization results than AMF2 (Table 2), as well as higher fresh weight and dry weight of the tomato plants, this being assessed at the moment when transplantation into field was to be performed (Figures 3 and 4).

**Table 2. Mycorrhization percentage and colony forming units of the different strains of Trichoderma harzianum used in the association for the tomato crop at the seedbed.**

| | Mycorrhization percentage | Standard Deviation | Trichoderma log (ufc / g) | Standard Deviation |
|---|---|---|---|---|
| AMF1 T78 | 38 | 4 | 4.48 | 0.10 |
| AMF1 T55 | 18 | 3 | 4.30 | 0.10 |
| AMF1 T38 | 17 | 2 | 4.00 | 0.08 |
| AMF1 | 28 | 4 | 0.00 | 0.00 |
| Control | 0 | 0 | 0.00 | 0.00 |
| AMF2 T78 | 22 | 2 | 3.48 | 0.07 |
| AMF2 T55 | 20 | 2 | 3.30 | 0.09 |
| AMF2 T38 | 22 | 2 | 4.00 | 0.09 |
| AMF2 | 17 | 3 | 0.00 | 0.00 |
| T78 | 0 | 0 | 5.65 | 0.41 |
| T55 | 0 | 0 | 4.45 | 0.03 |
| T38 | 0 | 0 | 5.00 | 0.09 |

The AMF1 also showed a better synergy with the Trichoderma strains than AMF2. The best results regarding size of the plant, nutritional state and mycorrhization percentage were for the AMF1-T78 combined treatment.

The combination of mycorrhiza AMF1 and the Trichoderma T78 strain showed the best growth rates in corn and tomato plants, as well as being those showing the lowest antagonism between each other.

ASSAY 2. Mixture study of the two microorganisms such as they are being used for individual inoculation thereof, and accomplishment of the optimum granulometry of both clays for each microorganism. Optimization of the ratio fort both microorganisms.

The initial product was based on two initial formulations, each one of them in an inorganic matrix: T78 in bentonite and AMF1 in zeolite, both featuring different granulometry, which caused an inappropriate mixture regarding homogeneity, being the natural tendency thereof that of separating into two phases, forcing a constant mixing so as to provide homogeneous inoculation. Because of that, it was decided to obtain equal granulometry by means of crushing or sieving through a mesh both materials, and by subsequent mixing thereof. In order to do that, each of the two matrices was ground with a hammer mill and thus these could be passed through a 0.5 mm mesh, such that everything passing therethrough was in a range from 0 to 0.5 mm.

This previous step increased the number of mycorrhiza propagules. So the dosage was clearly diminished by 5 times; on the other hand, grinding and sieving through the selected mesh, did not involve any effect in the concentration of the T78 strain. Because of that, from that moment on, mixtures of both products were performed at a 1:1 ratio, and once they were homogenized in a manner analogous to the previous one, a homogeneous product was obtained and it did not generate two phases at any time. Therefore, homogeneity of the product was achieved, thus preventing the two phases previously observed from appearing.

From that moment on, work continued with this mixture, and validation of the mixture was carried out, as well as optimization of the ratio for both microorganisms. For this purpose, the experiment was performed again in the corn and melon crops. The former was chosen since it allows confirming again the mycorrhization degree and the plant yield, while the latter was chosen since it would allow assessing if the effect of T78 strain, as well as acting as enhancer of mycorrhiza, would also keep the bio-pesticide effect thereof, thereby it was infected with the pathogen Fusarium oxysporum so that it could be possible to assess the effect of disease control depending on the dose of T78.

Treatments being assayed in all the cases were adjusted with a hammer mill with a 0.5 mm hole size mesh, and the ratio of the T78 strain to AMF mycorrhiza was optimized so as to achieve the optimum dose. In all the cases the same amount of clay was included wherein each of the microorganisms were immobilized in a 1:1 ratio, such that the amount of clay was not a variable, with the ratio being only between both microorganisms. With that purpose, homogenization of the T78 strain was performed in different doses, starting from the most concentrated and previously assayed, and in different dilutions thereof, such that a lower concentration was obtained.
Treatment 1 (our Treat 1):
   15 g of oats + 985 g of clay equivalent to 10(7) ufc/g of T78
Treatment 2 (our Treat 3):
   1.5 g of oats + 985.5 g of clay equivalent to 10(6) ufc/g of T78
Treatment 3 (our Treat 5):
   0.15 g of oats + 999.85 g of clay equivalent to 10(5) ufc/g of T78
Treatment 4:
   (our Treat 7): 100 g of Treat 5 + 900 g of clay equivalent to 10(4) ufc/g of T78

AMF mycorrhiza was fixed in all combinations, with the purpose of establishing the optimum ratio. The concentration of mycorrhiza was not reduced because this was the optimum ratio previously established to achieve a mycorrhization liable to have an effect on the plant growth, being the T78 strain the one which has to be optimized regarding the effect on the mycorrhization effect and the effect on the plant yield.

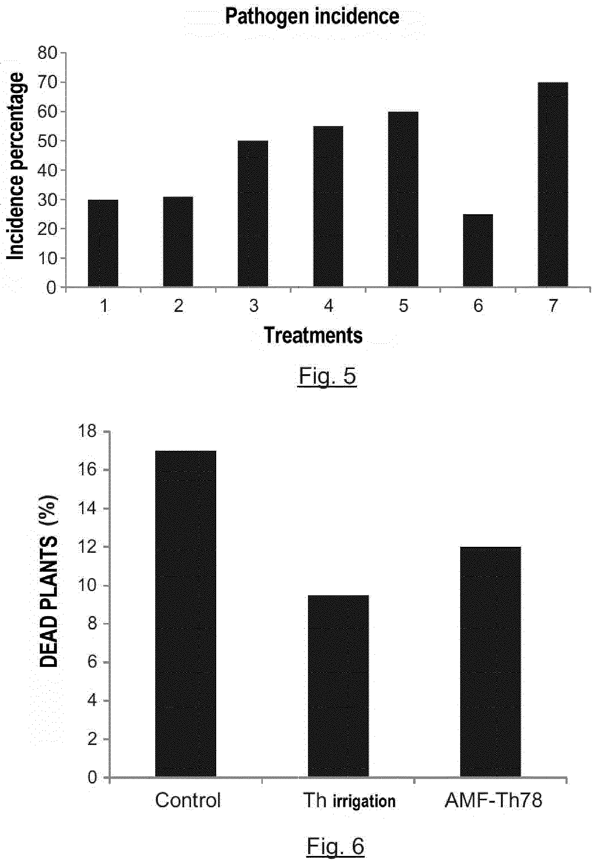

The mixture of the 2 biotechnological products applied on the corn and melon crops, showed that the optimum dosage/compromise of the two microorganisms was that including T78 to a dose of 10(6) ufc per gram and AMF in the assayed dose thereof. This was the composition which resulted in the best growth of the corn plants, the highest mycorrhization percentage both in the corn crops (Tables 4 and 5) and in melon crops (Tables 6 and 7); and also the bio-pesticide effect of the T78 strain was kept within the expected standards (Figure 5).

**Table 4. Fresh weight and diameter of the corn plants inoculated with the different treatments**

| | Fresh weight (g) | Dry weight (g) | Diameter (mm) |
|---|---|---|---|
| Treatment 1 | 24.68 | 3.04 | 11.14 |
| Treatment 2 | 42.65 | 5.56 | 13.36 |
| Treatment 3 | 29.85 | 3.84 | 11.60 |
| Treatment 4 | 22.87 | 2.80 | 10.63 |
| Treatment 5 | 21.36 | 2.64 | 9.77 |
| Treatment 6 | 25.13 | 3.30 | 11.05 |
| Treatment 7 | 27.83 | 3.50 | 11.06 |

**Table 5. Mycorrhization percentage and levels of Trichoderma harzianum T78 of the corn plants inoculated with the different treatments.**

| | % Mycorrhization | T78 (ufc / g) |
|---|---|---|
| Treatment 1 | 58% | 3.83E+05 |
| Treatment 2 | 73% | 6.59E+04 |
| Treatment 3 | 56% | 1.50E+03 |
| Treatment 4 | 55% | 2.75E+02 |
| Treatment 5 | 59% | 0 |
| Treatment 6 | 50% | 9.23E+03 |
| Treatment 7 | 7% | 0 |

**Table 6. Fresh weight and dry weight of the melon plants, inoculated with the different treatments at seedbeds.**

| | Fresh weight (g) | Dry weight (g) |
|---|---|---|
| Treatment 1 | 3.26 | 0.49 |
| Treatment 2 | 3.60 | 0.59 |
| Treatment 3 | 3.21 | 0.48 |
| Treatment 4 | 3.31 | 0.49 |
| Treatment 5 | 2.81 | 0.42 |
| Treatment 6 | 3.91 | 0.59 |
| Treatment 7 | 3.02 | 0.45 |

**Table 7. Mycorrhization percentage and levels of Trichoderma harzianum T78 of the melon plants inoculated with the different treatment at seedbeds.**

| | % Mycorrhization | T78 (ufc / g) |
|---|---|---|
| Treatment 1 | 6 | 2.83E+04 |
| Treatment 2 | 13 | 6.59E+03 |
| Treatment 3 | 6 | 3.10E+03 |
| Treatment 4 | 5 | 2.75E+03 |
| Treatment 5 | 6 | 0 |
| Treatment 6 | 3 | 1.02E+04 |
| Treatment 7 | 0 | 0 |

### ASSAY 3.

Use of the microbial combination, as compared to a traditional crop, and the use of each of the microorganisms separately in seedbed crops, for lettuce and pepper.

The object of this assay was to evaluate the effect of the microbial association AMF-T78 at seedbeds, so as to demonstrate the synergistic effect thereof, when incorporated or mixed in the peat or incorporated at the moment of placing the seed into the seed cell, so that these plants show a better development or resistance both at the seedbed and at the subsequent behaviour thereof when they are transplanted into the field.

With this purpose, germination was tested, at a commercial level, in a minimum amount of 10 germination trays for each of the crops to be assayed (pepper, melon, lettuce and onion), subsequently measuring the fresh weight, dry weight, mycorrhization percentage of 5 plants per tray and the colony forming units of the T78 strain. Regardless of the method of application and the type of tray, the application dose was 0.6 grams of the mixture AMF-T78 per plant. The pepper and melon species were planted on 150 seed-cell trays, with an average of 15 grams of peat per cell, and on the other hand lettuce and onion in 294 seed-cell trays, wherein the peat content was 2.5 grams. The choice of a different type of seed cell was selected on purpose so as to assess if the substrate amount could exert any effect on the microorganisms establishment.

The mixture was incorporated in a different way, which in the case of the melon 1 and lettuce and onion consisted of mixing the equivalent to the amount per seed in the peat, by making a prior homogenization of the mixture with the peat. Furthermore, in the case of pepper and melon 2, 0.6 grams of the mixture was also added, once the tray was filled with peat and into the hole realized before the seed is incorporated. This second case was intended to assess if the effect of a bigger initial ratio of the mixture with the seed could have any type of effect on the final result.

The general results observed were that treatments with AMF-T78 and AMF showed values being higher than the control, considering this treatment as peat; and that in general treatment with AMF-T78 showed a better effect than the rest of treatments, showing again the synergistic effect of this treatment upon the seedling growth at the seedbeds, and also that the combination of both microorganisms stayed in the seedling rhizosphere, such that upon being transplanted this synergistic effect could continue since the mycorrhiza could keep on exerting the effects thereof and be improved by the presence of a stable population of T78 strain and also the presence of Trichoderma levels would be suitable for preventing the attack of pathogenic microorganisms.

**Table 8. Mycorrhization percentage, Trichoderma harzianum T78 content of the AMF-T78 treatment and percentage with respect to the fungal population in the rhizosphere of the different crops**

| | Pepper | Melon 1 | Melon 2 | Lettuce | Onion 1 | Onion 2 |
|---|---|---|---|---|---|---|
| | Mycorrhization percentage (%) | | | | | |
| Control | 0 | 0 | 0 | 0 | 0 | 0 |
| AMF | 8 | 5 | 3 | 13 | 11 | 12 |
| AMF-T78 | 21 | 16 | 12 | 18 | 28 | 21 |
| | Content of T78 (ufc/g) and % percentage with respect to the peat fungal population | | | | | |
| Content of T78 in AMF-T78 treatment | 4.51 E+05 | 2.77E+05 | 3.77E+05 | | 1.70E+05 | 6.40E+05 |
| % with respect to the total fungal flora | 46.03 | 12.05 | 11.43 | | 21.36 | 17.74 |

Regarding how to incorporate the AMF-T78 association, the most effective manner was by direct application to the seed cell at the same time the seed is incorporated, although mixing thereof with the peat prior to incorporation thereof in the tray also provided results being higher than the control (Table 8). This second method for incorporating the association was to be done in those cases in which, because of operational reasons, direct application with the seed is not possible, or because it is not cost-effective due to the low cost of the crop, as it is the case of the lettuce, or because the adequate technology for incorporation into the seed cell is not provided.

**Table 9. Fresh weight, dry weight and weight per tray of pepper plant crop at seedbeds with different treatments.**

| | Pepper | Melon 1 | Melon 2 | Lettuce | Onion 1 | Onion 2 |
|---|---|---|---|---|---|---|
| | Fresh weight (g) | | | | | |
| Control | 3.35 | 3.26 | 6.46 | 4.73 | 1.51 | 1.35 |
| AMF | 3.62 | 3.29 | 7.44 | 6.13 | 1.79 | 1.99 |
| AMF+t78 | 3.55 | 3.33 | 9.12 | 6.04 | 2.22 | 1.38 |

| | Dry weight (g) | | | | | |
|---|---|---|---|---|---|---|
| Control | 0.55 | 0.50 | 0.47 | 0.41 | 0.14 | 0.08 |
| AMF | 0.58 | 0.52 | 0.44 | 0.54 | 0.17 | 0.10 |
| AMF+t78 | 0.58 | 0.54 | 0.52 | 0.60 | 0.18 | 0.08 |

| | Fresh weight per tray (g) | | | | | |
|---|---|---|---|---|---|---|
| Control | 502 | 489 | 968 | 1390 | 444 | 968 |
| AMF | 543 | 493 | 1117 | 1803 | 525 | 1117 |
| AMF+t78 | 533 | 500 | 1368 | 1776 | 653 | 1368 |

Incorporation of the association next to the seed is more effective because, from the moment the substrate humidification takes place, the contact of the microbial association and the seed/radicular system is more direct and concentrated from the very first moment, while if the same amount of the microbial association is spread over the whole seed cell, although exerting an effect, this occurs at the moment when the root contact the microorganisms, appearing as less optimum than in the case of initial contact.

In this assay, it can be concluded that there has been obtained a greater growth of the seedling at the seedbeds, as well as a plant having greater resistance capable of having a better response in the field due to the increased mycorrhization level and to the Trichoderma harzianum T78 levels.

### ASSAY 4.

Use of the AMF-T78 microbial combination, as compared to one of the microorganisms individually, in tomato crops in farms at a commercial level.

This experiment was conducted at a commercial level: soil crop and soilless culture, particularly in rock wool. The crops were located in the tomato growing area of the CARM, situated (Spanish acronym for the community of Murcia), situated in Mazarrón. In both cases the minimum area was equivalent to that comprising an irrigation plot, which in the case of a soil crop consisted of an area of 2500 m2, and in the case of soilless culture an area of 900 m2. In each one of both surfaces 3 blocks were arranged randomly wherein AMF-T78 was incorporated at the moment of transplantation, which in turn were divided into two different irrigation systems, one of them incorporating T78 when levels are lower than 10(4) ufc per gr, and the other with no application at all. Periodically, both the number of flowers per bunch, number of fruits already set, plants affected by any phytopathology, and the final yield of the production were measured. Thus, three rows of each of the three treatments were selected, upon which 5 plants were marked per row for monitoring the number of flowers, set fruits, and each of the harvest performed in the whole row was weighted, which involved a period from August until June of the following year. The harvest yield was calculated by selecting 3 representative rows of each one of the 3 treatments, quantifying the tomatoes weight through the tomato harvesting which consisted of weighing the tomato boxes coming from the rows every time the harvesting was done, which took place during the initial periods of twice per week until it was reduced to once per week, to finish by doing it every ten days.

### Soil crop

The results obtained corresponded to what has been observed for the rest of the crops showing a reduced pathogen incidence (Figure 6), mainly botrytis and oidium, and an increased harvest yield. In mid-November and mid-December, a severe botrytis attack was observed, which allowed observing the effect of the treatments being applied. Again, the disease or dry plant occurred in a less marked manner in the treatments incorporating T78, and in particular in those treatments in which AMF-T78 had been incorporated at the moment of transplantation (Figure 6). At the end of the crop, over April-May, there was an oidium attack which was treated by the farmer by means of sulphur sublimation, and in this case no difference was observed between AMF-T78 treatment and the control.

During the assay the height, number of bunches and number of flowers were assessed, as well as the number of tomatoes being set, with the weight of tomatoes from three rows of each one of the three treatments being also assessed.

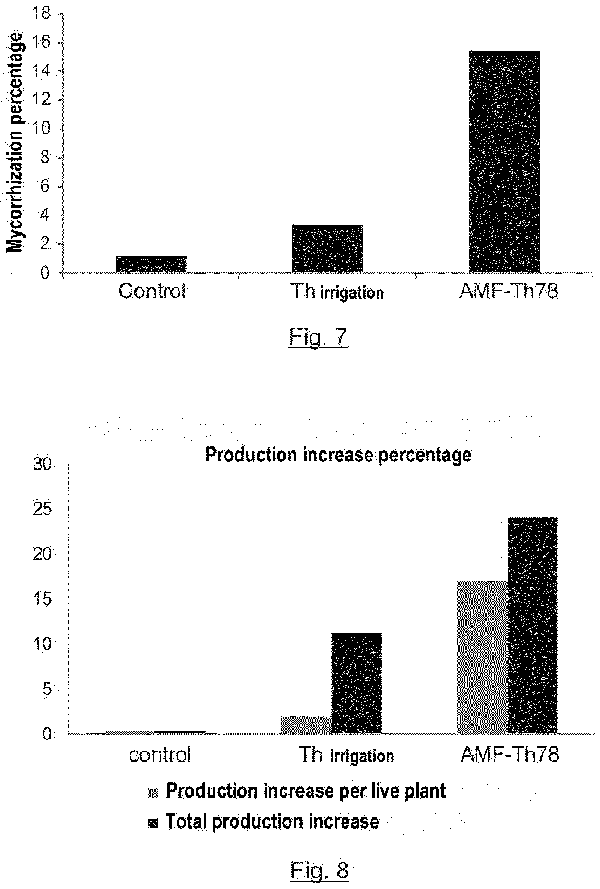

One of the important aspects to be taken into account was to evaluate if the treatments applied had been effective under the conditions of a field wherein the farmer continues with their usual protocols. From the first moment, a positive effect was observed from the AMF-T78 treatment in mycorrhization, as it is shown in Figure 7. The T78 levels were also higher in the two treatments wherein T78 was applied, which was kept in levels within 1.2 10(4) ufc /g of soil in the AMF-T78 treatment, which although being higher in the case of soil with T78 irrigation (3.5 10(4) ufc/g soil), in both cases the levels were above the order of 10(4) ufc/g, which is established as critical so as to have a positive effect on the soil.

No difference was observed regarding the nutritional content of the tomato plants, between control treatment and AMF-T78 treatment, wherein a higher degree of mycorrhization should express higher levels in particular of phosphorus. However, since the assay was carried out at a commercial level, the farmer works above the nutritional needs so there were not deficiency levels at any time which the action of the inoculated AMFs would manifest.

Regarding the harvest yield, the results being obtained were divided into the number of plants of each of the rows, with the object of obtaining double data, on the one side the yield per plant and on the other the total production yield. The first result is useful at the assay level in order to know the treatment effect per plant, not taking into account decrease due to plants death caused by disease, while the second one is the valid result and the one to be taken into account by the farmer. According to this, the AMF-T78 treatment produced a 17% increase in the harvest as compared to the standard or control which is the usual treatment the farmer applies, whereas application of T78 irrigation only produced a slight 2% increase. However, taking into account the decrease, the results are more than promising with respect to the effect produced by the treatment as compared to the control which almost reaches 25% in the case of AMF-T78 and about 15% in the case where T78 irrigation was applied (Figure 8).

Once more it is demonstrated that the effect of the AMF-T78 association had an effect on the tomato soil crop.

### Soilless culture (rock wool substrate) in a greenhouse under plastic

Tomato cultivation was repeated in soilless culture, using rock wool in a greenhouse under plastic. Following the research protocols at the present stage, it was decided to find a tomato farmer and to carry out with the application of this culture in collaboration with said farmer, who is allowed to apply the habitual both nutritional and plant health protocols.

Concretely, the crop was settled over a bag system in which rock wool is included, being intended for an average period of 5-year cultivation. Three tomato plants were placed in each bag, which had a cultivation cycle from the month of August until June. After cultivation of each one of them, the farmer removes the plant and proceeds with treatment with disinfectant and subsequent washing with irrigation water. In this irrigation system all the treatment or contribution comes from organic irrigation, with the plants being more exposed to misuse which can have more serious consequences as compared to those from soil crop, although it features the advantage of having more controlled conditions and showing a lower percentage of disease.

In this case, the wool rock bag had 3 cycles of cultivation at the moment of the assay. This could have some incidence in the treatment establishment, since all the remains of the rhizosphere of previous cycles are left in the bag, wherein these remains could compete somehow with the mycorrhizal inocula that are incorporated therein.

Due to the lower incidence of phytopathogens, the bio-pesticide effect of the AMF-T78 treatment, or T78 irrigation, could not be assessed since there was no incidence at all during the cultivation period.

The crop developed in a way corresponding to the usual conditions in the farm where the study was realized, showing a higher volume of fruit settings both in AMF-T78 and in T78 irrigation treatments as compared to the control.

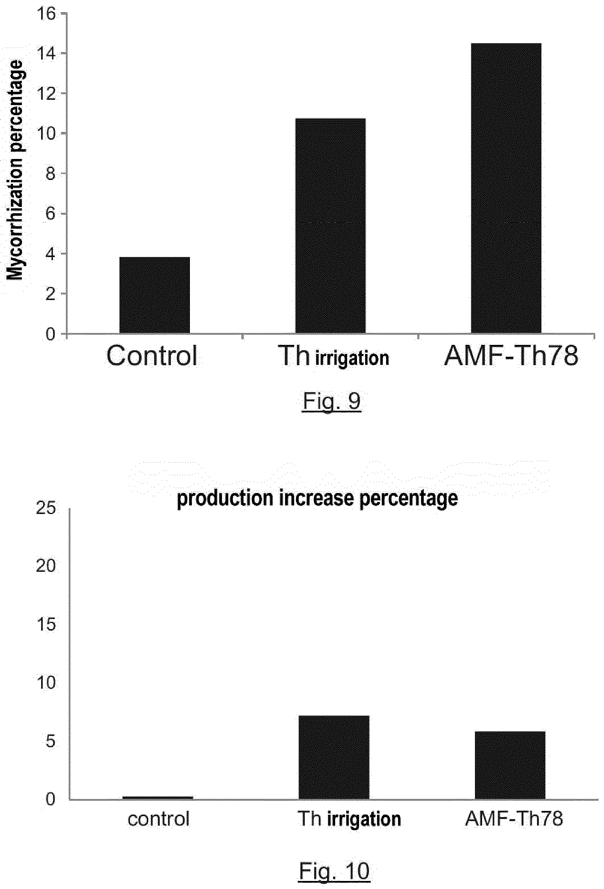

As in the previous assay, the mycorrhization degree and the T78 levels in the bag were periodically assessed, observing a different mycorrhization degree in the treatments as compared to the control, although in this case it should be pointed out that a great mycorrhization degree was observed in plants being only treated with Th78 irrigation. This can be due to the mycorrhization inducing effect which is characteristic of the T78 strain, which may cause that the possible mycorrhiza remains from the previous cultures colonize the roots similarly to AMF-T78 treatment. The handicap of working under these conditions, where it was difficult to distinguish between AMF-T78 treatment and the possible re-inoculating effect of the native mycorrhizae (Figure 9), had to be assumed in this case. The T78 levels were also higher in the two treatments in which Th78 was applied, showing the establishment and survival capacity of T78 strain, wherein the levels in the bags with only Th78 irrigation were 5.6 10(3) ufc/g, whereas in those including the treatment in the form of the AMF-Th78 product was 1.9 10(4) ufc/g.

The harvest yield was calculated as in the previous assay, by selecting 3 rows representative of each of the 3 treatments, quantifying the tomatoes weight over the tomato harvesting, consisting of weighing the tomato boxes coming from the rows each time tomatoes were harvested. The results obtained were divided into the number of plants from each one of the rows with the purpose of obtaining the yield per plant and then being able to extrapolate to yield per hectare. According to this, the AMF-T78 and T78 irrigation treatments showed values which were higher than the control or the usual treatment from the farmer, ranging in this case between 7% and 6% respectively (Figure 10). This result would have been increased in case of undergoing any disease due to the suppressing effect, although it was not detected in this year.

In this assay it can be concluded that incorporation of the AMF-T78 treatment in the transplantation of tomato plants, both in soil crop as in soilless culture, allows an increased harvest yield and a reduction of the possible incidence of phytopathogens, which results from the synergistic effect of the selected association.

### ASSAY 5.

Use of the microbial combination as compared to a traditional crop and use of each one of the microorganisms separately in melon soil crop at a farm at a commercial level.

This experiment was done at a commercial level, encompassing in the measure thereof the equivalent to an irrigation plot of 2.5 Has.

Two blocks were randomly taken from the rows, repeating in both of them the same treatments which consisted of applying the AMF-T78, AMF as compared to a control treatment which basically consisted of the usual agricultural protocol. The melon variety that was planted was Cantaloupe Migdal, which is a highly demanded variety in the European market. The seedlings were germinated in trays as usual, with the only difference being at the transplantation moment when either AMF-T78 treatment in the established 4 grams dose (equivalent to 2 gr of AMF and 2 gr of T78), or 2 gr of AMF or 2 grams of T78, or nothing, equivalent to the control treatment, is incorporated into the hole which is realized prior to transplantation. During the growing period a visual inspection was performed once a week, registering every type of incidence. At the moment the harvest started, this was registered per row according to the treatment.

From the visual results it was observed that different natural diseases affected in a different way depending on the treatment, being relevant having incorporated T78 to the soil in the AMF-T78 treatment, allowing a 5% to 1% reduction. The phytopathogens being determined were Pythium ultimum followed by Fusarium oxysporum in the first 3 weeks, later observing an oidium attack.

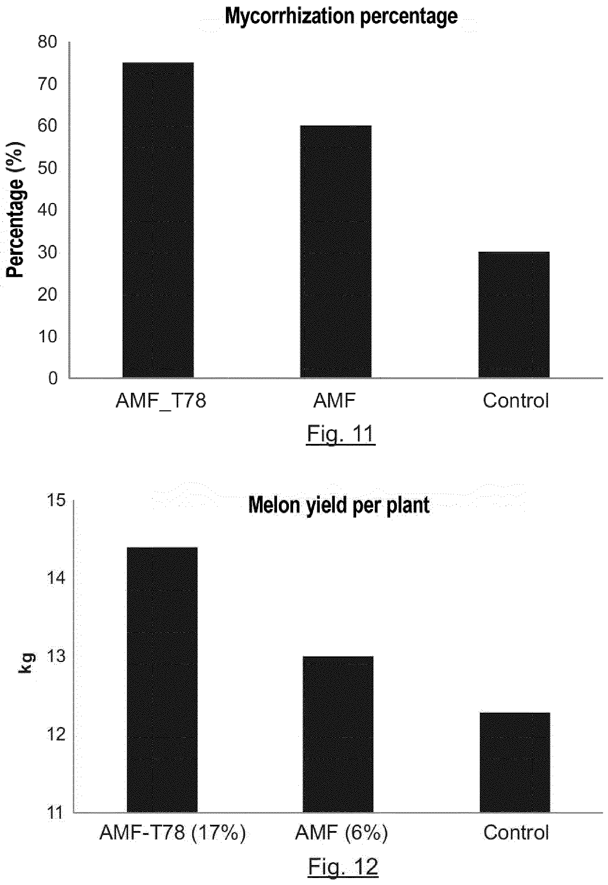

Both the mycorrhization percentage as the T78 level were detected at the end of the experiment, after melon harvesting and subsequent removal of the plants, taking samples from the deepest and thinnest roots for the mycorrhizae count, and from the rhizosphere thereof for the T78 count. The mycorrhization percentage was higher in the plots treated with AMF-T78 than in those wherein AMF was incorporated and in both cases they exceeded the control levels (Figure 11).

However, since the soil was the usual agricultural soil, it was not possible to verify, as in the previous studies, that the established mycorrhiza was that being detected by means of staining and microscopic observation. Trichoderma harzianum T78 levels were only detected in the rhizosphere of the melon plants cultivated with the AMF-T78, with an average value 5 10(4) ufc/g of soil, these not being detected in the other treatments.

Regarding the harvest yield, it should be noted that, again, AMF-T78 treatment showed yields above those showed by only AMF, with respect to the control treatment yield (Figure 12). Incorporating the combination of the AMF-T78 association during transplantation produced a significant increase in the harvest yield of about 6% in the case of AMF treatment, and in the case of AMF-Th78 treatment, the production values reached 17%, which in economic terms is a quantity significant enough to consider the microbial treatments under study. Thus, it could be concluded that AMF treatment, although it could not be microscopically determined, must have established in the root, since plants showed a higher efficiency in the crop yield thereof, being this the variable under study. On the other hand, Th78, as it has been shown in the study, improved once more the mycorrhization percentages which, together with the direct effect of the T78 strain, were responsible of a 6% improvement of the harvest yield, until reaching the 17%. Again, the synergistic role of the selected microbial association makes the yield triplicate, possibly due to enhanced mycorrhization which generates a better use of the nutrients in the soil that is translated into better performance of the plants, and that leads to a better harvest yield.

In this assay it can be concluded that the AMF-T78 association produces an increased yield in the melon harvest, which results in a 17% increase, due to a higher mycorrhization degree of the plant by AMF, due to the synergistic effect of the T78 strain. Furthermore, the presence of T78 in transplantation also improves the plant health condition, reducing the effect of phytopathogens from 5 to 1%, which involves a significant reduction, significant enough so as to avoid re-planting, and in case it cannot be avoided, to increase the yield considerably. In these cases, it cannot be determined if there is a higher mycorrhization percentage in the inoculated plants, since in the soil there are natural-occurring mycorrhizae, but which is indeed demonstrated is that Trichoderma harzianum significantly enhances the mycorrhization percentage, both in plants treated with the microbial association and in those being inoculated with Trichoderma harzianum T78 alone.

## Claims

1. Composition comprising species from the genus *Glomus* and the *Trichoderma harzianum* T78 strain, identified by the deposit number CECT 20714.

2. Composition according to claim 1, **characterized in that** it comprised a mixture of the species *Glomus intraradices, Glomus claroideum, Glomus mosseae* and *Glomus etunicatum.*

3. Composition according to claim 1 or 2, **characterized in that** it comprises bentonite and zeolite.

4. Composition according to any of claims 1 to 3, **characterized in that** the particle size of the composition is lower than or equal to 0.5 mm.

5. Composition according to any of claims 1 to 4 for use thereof as a plant growth promoter or for preventing or treating infections caused by pathogenic microorganisms in a plant.

6. Composition for use according to claim 5, **characterized in that** said plant is selected from the group consisting of tomato, corn and melon.

7. Composition for use according to claim 5 or 6, **characterized in that** said pathogenic microorganism is selected from the group consisting of *Fusarium oxysporum, Pythium ultimum, Botrytis cinerea* and *oidium.*
